# EUROPEAN PATENT APPLICATION

(11) **EP 4 015 061 A1**
(43) Date of publication of application: **22.06.2022**
(21) Application number: 21210530.8
(22) Date of filing: 25.11.2021
(51) Int. Cl.: B01D 53/04

(54) **ACTIVATED CARBON FILTER AND ITS MANUFACTURING PROCESS**

(30) Priority: 27.11.2020 IT 202000028712; 31.05.2021 IT 202100014174
(71) Applicant: B.M.D. S.p.A., 00019 Bagni di Tivoli Roma (IT)
(72) Inventor: CARCANO, Riccardo, 00100 ROMA (IT); CIRELLI, Marco, 00100 ROMA (IT); MARATA, Claudio, 00012 GUIDONIA MONTECELIO (ROMA) (IT)
(74) Representative: Rossi, Ugo

(57) **Abstract**

The invention relates to a housing 20 for a flat filter 22 with activated carbon 24 for industrial use. The housing comprises a perimetral frame 26 and two permeable panels 28 parallel to each other. At least one of the two panels 28 is a corrugated panel 282.

The present invention also relates to a filter 22 with activated carbon 24 for industrial use comprising the housing 20, a bag 36 made of textile material and a predetermined amount of activated carbon 24.

The present invention also relates to a process for manufacturing the housing for activated filters.

## Description

The present invention relates to an activated carbon filter, in particular a flat activated carbon filter for air treatment in a professional setting, and the process for the manufacture thereof.

In the field of treatment of fluid flows, both gases and liquids, the use of activated carbon filters is broadly known and appreciated, as they are capable of capturing a vast range of pollutants by adsorption, thus removing them from the fluid.

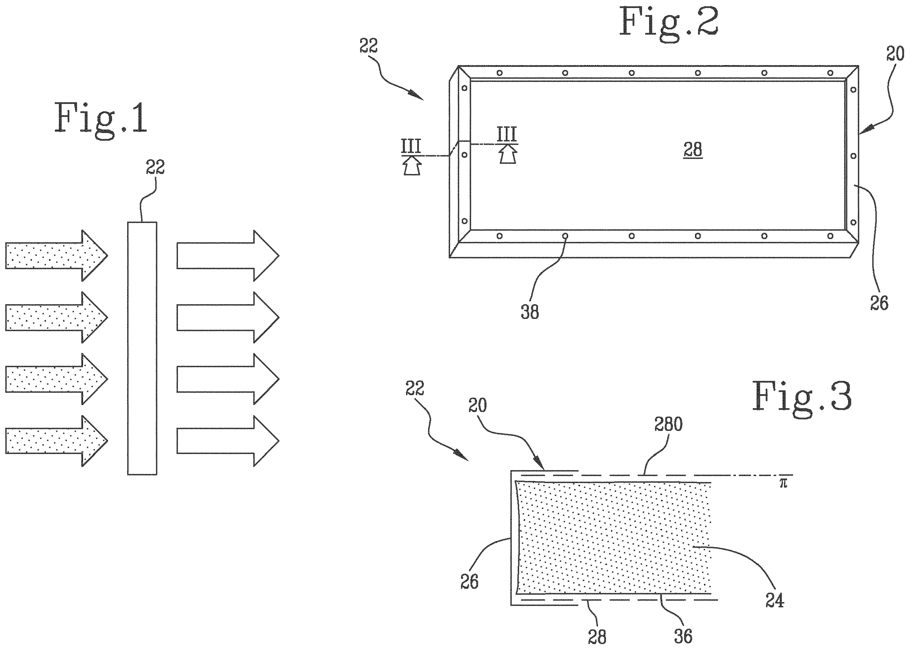

The present invention has its most advantageous application in flat filters for the treatment of gas flows in a professional or industrial setting; they will be described in greater detail below with reference to figures 1 to 7. However, as the skilled person can well understand, the invention can also have application in other fields, such as, for example, air treatment in the domestic sector, typically in kitchen exhaust hoods, or the treatment of liquids.

The use of activated carbon filters for professional and/or industrial use is particularly suitable for air treatments aimed at ensuring safety and/or comfort in environments where various pollutants can be present or develop. In fact, activated carbon filters enable odours, volatile organic solvents and acid gases to be captured and removed from the air. For this reason, such filters are broadly employed in air treatment systems of laboratories, public buildings, airports, restaurants and the like. The effect of a filter 22 with activated carbon 24 is schematically represented in figure 1, which shows a flow of air loaded with pollutants which enters the filter 22 and a flow of air without pollutants that exits from the filter 22. The filter 22 with activated carbon 24 is substantially flat.

In a manner that is known per se, filters 22 with activated carbon 24 comprise a plastic or metal housing 20 containing therewithin loose activated carbon 24 in the form of granules, this term meaning both actual granules and flakes, pellets, rods or other suitable forms. The typical housing 20 of a filter 22 with activated carbon 24 is described below with particular reference to figures 2 and 3. The housing 20 comprises a perimeter frame 26 and two permeable panels 28. The perimeter frame 26 is typically made from profiles that assure a relatively high structural strength and stiffness. The perimeter frame 26 defines the thickness of the filter 22, from which derives the length of the path the air flow will have to travel when passing through the activated carbon 24. The perimeter frame 26 supports the two permeable panels 28, parallel to each other, which can be made from a screen, a perforated metal sheet, a grill or the like. The permeable panels 28 are usually joined to the perimeter frame 26 by means of welding spots 38.

Each of the two panels 28 is a flat panel 280, that is, leaving aside its thickness, which is considered negligible for the purposes of the present discussion, it extends in a single plane π. Naturally, the mesh size of the of the screen or the size of the holes in the metal sheet is smaller than that of the granules of activated carbon 24, so as to prevent them from spilling out. This box-like structure enables an effective containment of the activated carbon 24 and, at the same time, allows the passage of air and hence the filtering action.

The inside of the housing 20 of the filter 22 can usually be lined with a textile, NWF (nonwoven fabric) or micro-perforated material, which forms a sort of bag 36 (see figure 3 for example). The bag 36 made of textile, NWF or micro-perforated material is adapted to avoid the dispersion of dust. In fact, during the production of the filter 22 and the subsequent handling it undergoes up to the time of assembly, the impacts and rubbing that inevitably occur between the granules produce carbon dust 24, which risks being drawn by the air flow or falling due to gravity. In order to avoid this problem, a bag 36 made of textile material is provided; once closed, it encloses the activated carbon 24, retaining the dust.

The filters 22 with activated carbon 24 of a known type can take on very different sizes in relation to the different industrial applications for which they are intended and the volumes of air they are intended to treat. By way of example, the smallest industrial filters 22 have a front cross section of a few square decimetres and a thickness of a few centimetres and contain about 250 grams of activated carbon 24 inside them. The largest industrial filters 22 can reach a size of 915 mm x 700 mm with a thickness of 70 mm or 450 mm x 600 mm with a thickness of 98 mm; these sizes contain about 27 kg of carbon. Therefore, as the skilled person can well understand, the structure of the filters 22 of these sizes must be sufficiently robust in order to support the not inconsiderable weight of the activated carbon 24, but at the same time it must be lightweight so as to allow an efficient passage of air and contain production costs.

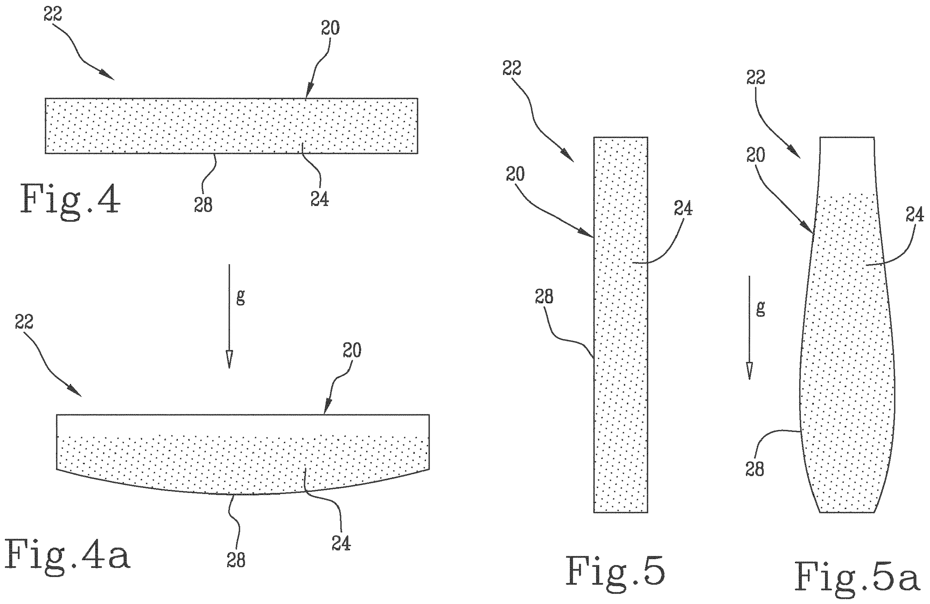

The known structure described above, consisting solely of a perimeter frame 26 and two flat panels 280, undergoes increasingly large deformations as the size of the filter 22 and the weight of the activated carbon 24 increase. If the filter 22 is arranged horizontally (figure 4), it is the lower panel 28, on which the weight of the carbon acts directly, that is mainly deformed. This condition is schematically represented in figure 4a, in which the deformation is emphasised for a better understanding of the phenomenon. If, on the other hand, the filter 22 is arranged vertically (figure 5), both panels 28 are deformed symmetrically as a result of the hydrostatic pressure exerted by the carbon mass. This condition is schematically represented in figure 5a, in which the deformation is emphasised for a better understanding of the phenomenon.

Such deformations imply two different kinds of problems. Firstly, the deformations risk compromising the possibility of correctly mounting and easily removing the filter 22. In fact, when the deformations exceed the tolerances considered acceptable in the sector, they can introduce interferences with other components of the air treatment system, for example with the seat in which the filter 22 is accommodated. Furthermore, as the skilled person can well understand, the deformations of the permeable panels 28 necessarily imply a modification of the internal volume of the filter 22 and, consequently, a spontaneous redistribution of the granules of activated carbon 24 compared to the design position. For this reason, as can be noted both in figure 4a and in figure 5a, after the unwanted redistribution of the granules of activated carbon 24, new preferential pathways for the airflow are created, i.e. pathways along which the resistance is minimal and which therefore attract the largest portion of the flow. At best (figure 4a), such pathways can be shorter than the minimum design pathway, so the air that flows along them meets less activated carbon 24 than is necessary for an efficient treatment. Or at worst (figure 5a) pathways completely devoid of activated carbon 24 can be created, which thus allow a preferential passage for the air through which no treatment takes place.

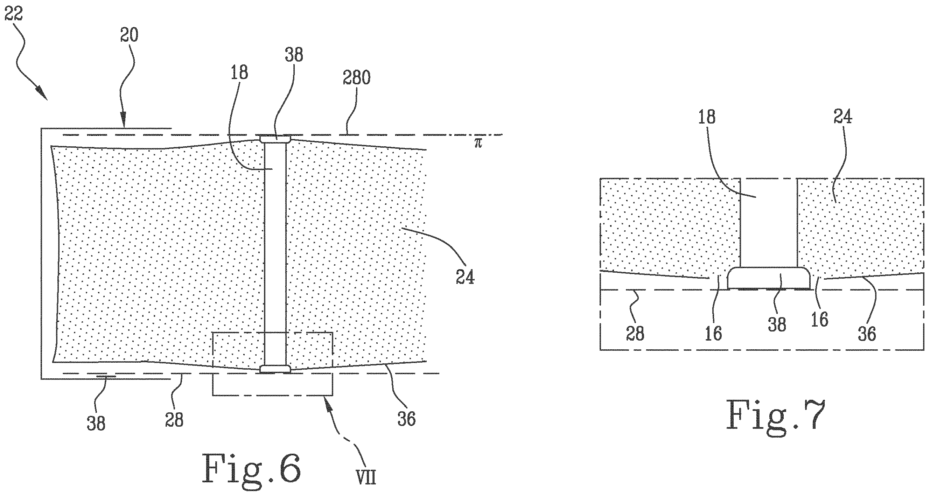

A known way to remedy the above-described problems is to provide internal constraining means 18 which constrain the two permeable panels 28 to each other. This solution is described below with particular reference to figures 6 and 7. The constraining means 18 comprise a quantity of steel rods welded between the two panels 28. The presence of internal constraints solves the problem of deformation. In fact, if the filter 22 is arranged vertically, the constraining means 18 impose the correct distance between the two panels 28 and this prevents the deformation schematised in figure 5.a. If, by contrast, the filter 22 is arranged horizontally, the presence of the constraining means 18 will ensure that the carbon load 24 is supported by the entire structure of the filter 22, rather than only the lower flat panel 280. In fact, the constraining means 18 join the two panels 28 into a single structure, in which each longitudinal section can be likened to a classic double-T beam. In this structure the constraining means 18 perform the function of core of the beam, whereas the two flat panels 280 perform the function of wings of the beam. Such a structure, by exploiting the distance between the two panels 28, ends up having an extremely high moment of inertia and therefore, the load being equal, undergoes negligible bending deformations compared to the sole lower panel 28 shown in figure 4a.

Providing the internal constraining means 18 thus ensures that the filter 22 will maintain its shape and hence its efficiency as defined at the design stage.

However, this solution, though widely adopted and appreciated, is not free of drawbacks. In fact, the presence of the constraining means 18 precludes the continuity of the textile material of the bag 36. Making specific reference to the detail in figure 7, the skilled person can well understand that around each of the welds 38 joining the panels 28 to the constraining means 18, there must necessarily be an interruption 16 of the textile material of the bag 36. Each interruption 16, even if small, of the textile material implies a potential leakage of carbon dust 24 and hence the risk of a contamination of the environment surrounding the filter 22. Furthermore, the welds 38 joining the perimeter frame 26 to each of the two permeable panels 28, and joining the permeable panels 28 to the constraining means 18, cause the removal of the protective layer obtained by hot galvanisation of the metal sheet. Each weld 38 thus constitutes a rapid trigger point for corrosion of the galvanised metal sheet.

At present, the assembly of filters takes place with the aid of welding spots between the frame and suitably shaped metal sheets. The innovation brought by the present invention is that of using a frame system shaped in such a way as to avoid or considerably reduce the welding spots.

In this manner all the problems associated with welding (already listed previously) will be obviated.

The object of the present invention is thus to overcome the drawbacks highlighted above in relation to the prior art.

In particular, in a first aspect, a task of the present invention is to provide a filter that ensures the continuity of the textile material of the bag that retains the activated carbon and the associated dust.

Furthermore, a task of the present invention is to provide a filter that ensures minimal deformations, comprised within tolerances that are acceptable for the specific technical field.

Finally, a task of the present invention is to provide a filter that prevents the formation therewithin of preferential pathways amidst the activated carbon, thereby maintaining the efficiency of the air treatment defined at the design stage.

In particular, in a third aspect, a task of the present invention is to provide a process for the manufacture of a filter that enables it to be made without the need to rely on welds.

Another object of the present invention is to provide a process for manufacturing a filter that ensures the continuity of the textile material of the bag retaining the activated carbon and the associated dust.

A further object of the present invention is to provide a process for manufacturing a filter that is simple and efficient.

Said object and said tasks are achieved by means of a housing in accordance with claim 1 and by means of an activated carbon filter in accordance with claim 9.

Said object and said tasks are also achieved by means of a process for manufacturing a housing in accordance with claim 11 and by means of a process for manufacturing a flat activated carbon filter.

To enable a better understanding of the invention and an appreciation of its advantages, some embodiments thereof are described below by way of non-limiting example, making reference to the appended drawings, in which:
- figure 1 schematically shows the action of an activated carbon filter of a known type;
- figure 2 schematically shows an axonometric view of an activated carbon filter of a known type;
- figure 3 schematically shows a view of a section drawn along the broken line III-III in figure 2;
- figures 4 and 4a schematically show a filter of a known type arranged horizontally and the deformation thereof;
- figures 5 and 5a schematically show a filter of a known type arranged vertically and the deformation thereof;
- figure 6 schematically shows a sectional view similar to the one in figure 3, of another known type of filter;
- figure 7 shows an enlarged view of the detail indicated by VII in figure 6;
- figure 8 schematically shows an axonometric view of an activated carbon filter in accordance with the invention;
- figure 9 schematically shows a cross-section view of an activated carbon filter in accordance with the invention;
- figure 10 schematically shows a detail of the activated carbon filter in figure 9;
- figure 11 schematically shows several other possible embodiments of a panel of a filter in accordance with the invention;
- figure 12 schematically shows the steps of bending the permeable panels according to a first embodiment of the invention;
- figure 13 schematically shows the steps of bending the permeable panels according to a second embodiment of the invention;
- figure 14 schematically shows the steps of bending the frame holding the panels; and
- figure 15 schematically shows the steps of final assembly of the activated carbon filter in figures 8 to 11.

In the context of the present disclosure, some terminological conventions have been adopted in order to make reading simpler and more fluid. Such terminological conventions are clarified below with reference to the appended figures.

As the invention is intended to be used in the presence of the acceleration of gravity g, it is understood that the latter unambiguously defines the vertical and horizontal directions. Similarly, it is understood that the terms "high", "upper", "above" and the like are unambiguously defined based on the acceleration of gravity g relative to the terms "low", "lower", "below" and the like.

In accordance with a first aspect thereof, the invention relates to a housing 20 for a flat filter 22 with activated carbon 24 for industrial use. The housing 20 comprises a perimeter frame 26 and two permeable panels 28 parallel to each other. In the housing 20 of the invention, at least one of the two panels 28 is a ribbed panel 282.

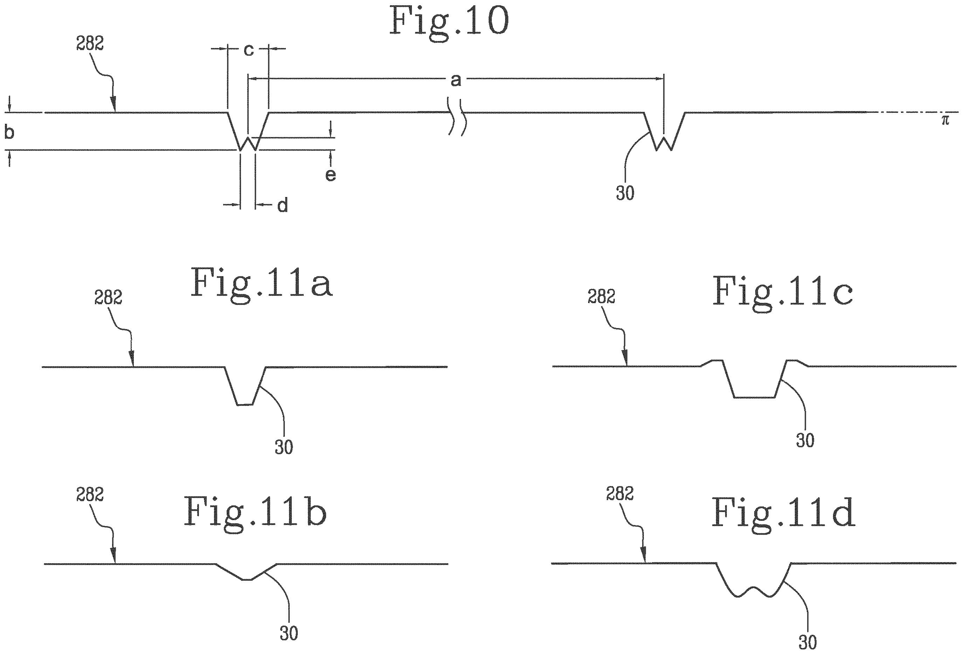

The ribbed panel 282 or corrugated or trapezoidal panel of the invention can be made, in a similar manner to panels 28 of a known type, with a screen, a perforated sheet, a grid or the like. As mentioned above, the panels 28 of a known type extend completely in a single plane π. The ribbed panel 282 of the invention, by contrast, can extend prevalently in a main plane π, but it comprises ribs 30 that are spaced away from the plane π. In other words, the ribs 30 project from the main plane π. Preferably, the ribs 30 are obtained by consecutive folds of the panel 28, parallel to each other, which bring some portions of the panel 28 to a predetermined distance from the main plane π of the panel 28 itself. Some possible embodiments of the ribbed panel 282 will be described subsequently with reference to figures 10 and 11.

The housing 20, and hence the perimeter frame 26 and the panels 28, preferably have a polygonal shape, even more preferably they have a rectangular shape.

In a manner that is known per se, the perimeter frame 26 is made with profiles obtained from bent sheet metal, which ensure relatively high structural strength and stiffness.

Advantageously, the panels 28 are joined to the perimeter frame 26 in such a way as to form a solid structure. In accordance with some embodiments, the panels 28 are joined to the perimeter frame 26 by a weld 38, for example a spot weld.

As mentioned above, in the housing 20 of the invention, at least one of the two panels 28 is ribbed. The solution with a single ribbed panel 282 is suitable for applications in which the filter 22 is intended, during use, to be arranged horizontally and has very precise predefined arrangement. In such cases it is sufficient that the lower panel 28 be ribbed, i.e. the panel bearing the load of activated carbon 24. The upper panel 28, which must support considerably smaller loads, can be a flat panel 280 of a known type. In all the other cases, that is, when the filter 22 is intended to be mounted vertically, or when it does not have a predefined arrangement and both of the panels 28 can become, during use, either the upper panel 28 or the lower panel 28, then it is preferable for both panels 28 to be ribbed panels 282.

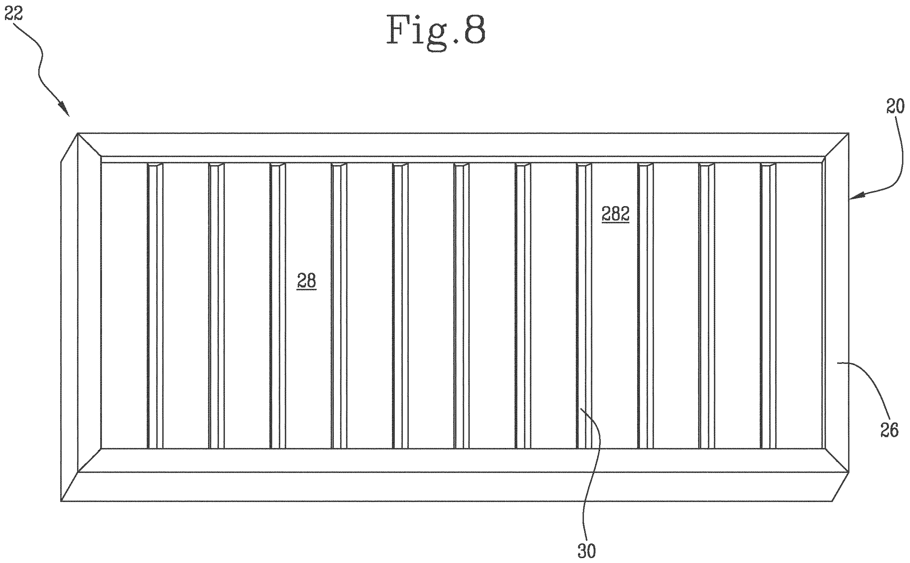

As illustrated in figures 8 to 16, at the ribs 282 the distance between the lower part of the rib 281 of a first flat panel 28 is less than the distance between the flat parts of two parallel panels 28. Between two consecutive ribs 30 of the same panel 282 there will be a flat portion of the panel.

A specific embodiment of the ribbed panel 282 of the invention is described below in greater detail with reference to figure 10. In this embodiment of the panel 28, the ribs 30 take on what is called a W shape and are preferably distributed in a regular manner along the panel 28. For example, the ribs 30 can be spaced apart from one another by a pitch a (wherein the panel is flat). The maximum width of the ribs 30 in the main plane π of the panel 28 is referred to as c, *whereas* the minimum width, in the point farthest from the plane π, is referred to as d. The rib 30 has an extension b in a direction perpendicular to the plane π. Finally, this specific embodiment of the ribs 30 is called W-shaped because the portion farthest from the main plane π of the panel 28 is not flat, but rather comprises in turn a small counter-rib 32 that has an extension e towards the plane π. This shape imparts a particular stiffness to the rib 30 and hence to the ribbed panel 282, as well as to the entire housing 20.

According to a non-limiting example, the dimensions of the parameters related to the ribs can preferably be: a = 120 mm, b = 15 mm, c = 30 mm, d = 6 mm, e = 6 mm.

Other possible embodiments of the ribs 30 are briefly described below with reference to figure 11. Figures 11a and 11b show ribs 30 similar to the one in figure 10, but which do not comprise any counter-rib 32. In other words, in these embodiments of the ribs 30, the portion farthest from the plane π is flat and parallel to the plane π, so that the ribs 30 can be called U- or V-shaped. In the rib 30 in figure 11a, the maximum extension b is greater than the maximum width *c,* whilst in the rib 30 of figure 11b, the maximum extension *b* is less than the maximum width *c.* Figure 11c shows a rib 30 in which the extension *b* does not extend completely from one side only of the plane π, but rather extends from both sides, albeit in different proportions. Figure 11d shows a W-shaped rib 30 similar to the one in figure 10, obtained, however, by means of connecting curves rather than sharp pointed bends.

As the skilled person can well understand, the embodiments described above are only some of the possible embodiments of the ribs 30. Other possible variants can be employed to satisfy specific needs, without going outside the scope of the invention. For example, use can be made of ribs 30 in which the maximum width is not in the main plane π of the panel 28, that is, in which the rib 30 widens as it extends away from the plane π. Such ribs can be definite as Ω-shaped.

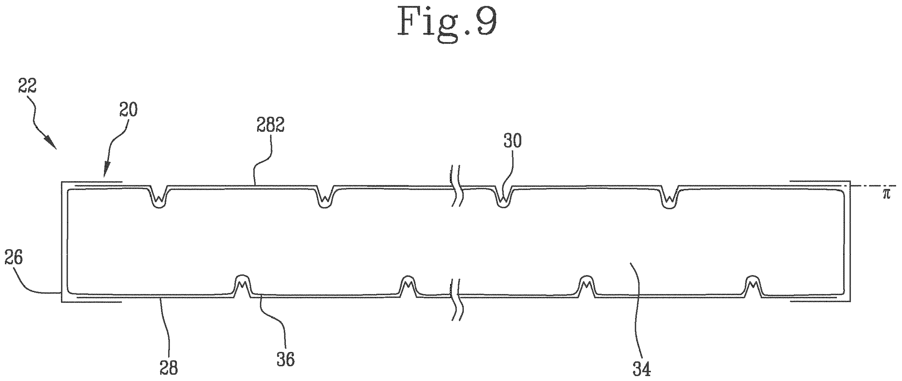

As the skilled person can well understand, irrespective of their shape, each of the ribs 30 can be seen as a beam. The ribs 30 thus impart to the ribbed panels 282 a moment of inertia that makes them much stiffer than the flat panels 280 of the prior art. For this reason, in the housing 20 of the invention it is possible to avoid any constraining means 18 which, in addition to the perimeter frame 26, joins the two panels 28 to each other. In other words, the housing 20 defines therewithin one continuous, uninterrupted cavity 34 (see also figure 9, in which, for the sake of simplicity, the activated carbon 24 is not represented). Defining the cavity 34 as one, continuous and uninterrupted means that it is possible, for example, to move a hand from one wall to another inside it without interruptions. In more rigorous terms, making reference to geometry, this characteristic can be defined by saying that the cavity 34 defined by the housing 20 of the invention is a simply connected topological space, i.e. it is a space within which:
- Any pair of points can be joined by a continuous path comprised in the cavity; and
- Any closed curve can be deformed with continuity until becoming a point.

The housing 20 preferably comprises two ribbed panels 282, wherein both panels 28 comprise ribs 30 spaced apart from one another by a pitch a. The two ribbed panels 282 are arranged so that the ribs 30 of one panel 28 are parallel to the ribs 30 of the other panel 28. Even more preferably, the two ribbed panels 282 are arranged so that, in a view perpendicular to the two panels 28, a rib 30 of one a panel 28 (for example the upper one) is comprised between two ribs 30 of the other panel 28 (for example the lower one). For example, it is preferable that, in a view perpendicular to the two panels 28, a rib 30 of the upper panel 28 is situated halfway between two ribs 30 of the lower panel 28 (see figure 9).

In accordance with a second aspect, the invention relates to a filter 22 with activated carbon 24 comprising a housing 20 in accordance with what has been described above, a bag 36 made of textile or micro-perforated material and a predetermined amount of activated carbon 24. In the filter 22 with activated carbon 24 of the invention, the textile material of the bag 36 continuously extends along both the panels 28. In other words, the textile material of the bag 36 extends along both the panels 28 without any interruption 16.

Textile material, here and further below, is understood as an actual fabric, an NWF (nonwoven fabric), a micro-perforated membrane, a sheet of paper, or any other layer of a type known per se that allows dust to be retained and allows an easy passage of air. Advantageously, in a manner that is known per se, the activated carbon 24 is provided in the form of granules, flakes, pellets, rods or any other form suitable for use in the filter 22.

In particular, as the skilled person can well understand, the superior mechanical features of the ribbed panels 282 impart to the housing 20 the stiffness necessary to prevent undesirable deformations without there being any need to provide internal constraining means 18. In this manner, the cavity 34 defined by the housing 20 is one, continuous and uninterrupted (i.e. it is a simply connected topological space) and can thus contain a continuous bag 36 made of textile material, inside which the activated carbon 24 is arranged. There is thus no need to create any interruption 16 in the textile material, as was the case in the prior art solutions.

In accordance with a third aspect thereof, the invention relates to a process for manufacturing a housing 20 for a flat filter 22 with activated carbon 24 for industrial use, comprising the steps of providing two permeable panels 28 parallel to each other, forming a perimeter retaining frame 26 by bending and inserting the two panels 28 into said perimeter retaining frame 26.

In the process for manufacturing the housing 20 of the invention, at least one of the two panels 28 is a ribbed panel 282.

The ribbed panel 282 or corrugated or trapezoidal panel of the invention, similarly to the panels 28 of a known type, can be made using a screen, a perforated metal sheet, a grid or the like.

The forming process takes place with the aid of a press brake machine with suitably shaped blades. This enables the ribs to be formed in sequence at a regular distance through the combination of a pressing motion and a translation motion.

The housing 20, and hence the perimeter frame 26 and the panels 28, preferably have a polygonal shape, even more preferably they have a rectangular shape. In such a case, the process for manufacturing the housing starts off from a strip of sheet metal of the desired width in order to make the permeable panels 28.

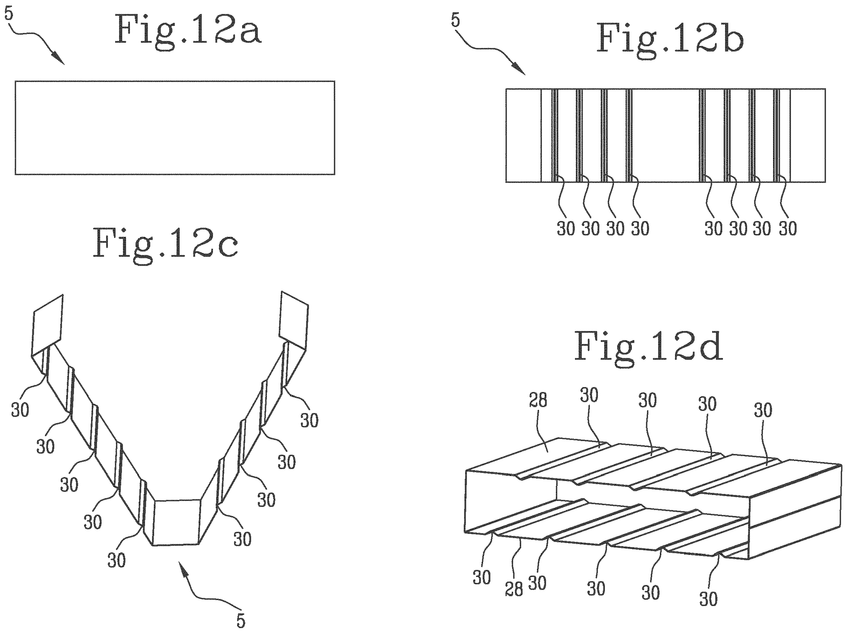

A first embodiment of the invention, illustrated in figures 12a, 12b, 12c and 12d, envisages making the panels 28 using a single metal sheet 5, wherein the ribs 30 and optionally the bending points of the metal sheet are suitably shaped.

Figure 12a shows the extended sheet 5 before the bending process, in figure 12b the sheet 5 where the ribbing operations have been performed is represented, in figure 12c the sheet 5 is shown in an intermediate bending configuration and in figure 12d the sheet 5 is completely bent so as to form the two permeable panels 28 arranged facing each other.

The metal sheet can have three or four lines delimiting the bending points. The metal sheet 5 can preferably comprise a positioning and coupling flange 7.

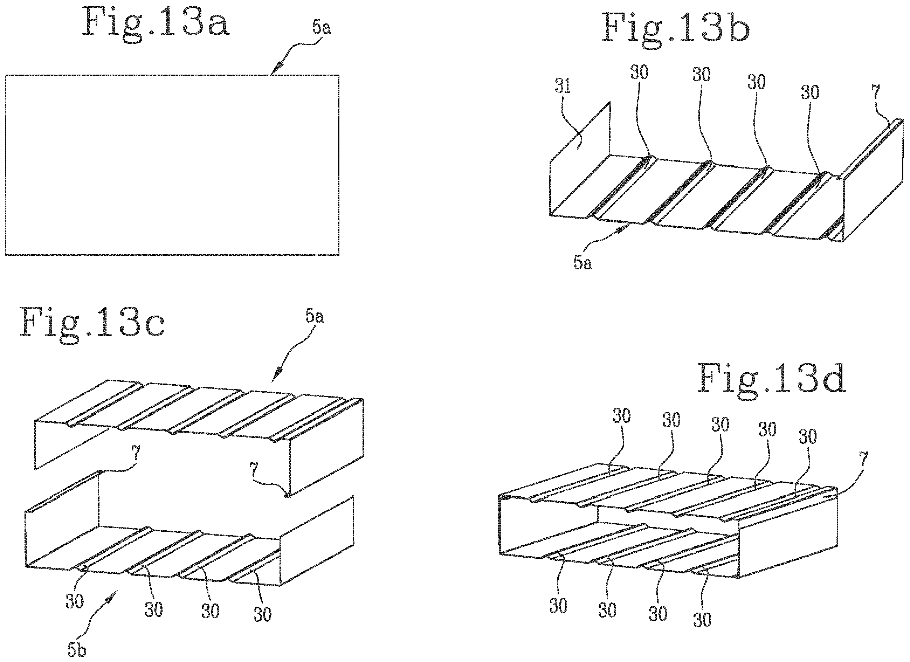

A second embodiment of the invention, illustrated in figures 13a, 13b, 13c and 13d, envisages making the panels 28 from two flat, extended metal sheets 5a and 5b.

After having suitably shaped the ribs 30 on one or both metal sheets 5a and 5b, one proceeds to bend each metal sheet into a "C" or "L" shape. The discriminant between the "C" shape and "L" shape is given by the length of the fold or flange "31".

Subsequently, the two metal sheets 5a and 5b are arranged facing each other so as to form the housing 20.

Figure 13 shows the various steps of bending each single panel 5a and 5b and the positioning thereof prior to insertion into the perimeter retaining frame 26 provided.

In particular, figure 13a shows the extended sheet 5a, 5b of a single panel prior to the bending process, figure 13b shows the sheet 5a, 5b where the ribbing and bending operations have been performed, in figure 13c the bent panels 5a, 5b are shown adjacent to each other, and in figure 13d the panels are positioned so as to be able to be inserted into the frame.

One or both metal sheets 5a, 5b can preferably comprise a positioning and coupling flange 7.

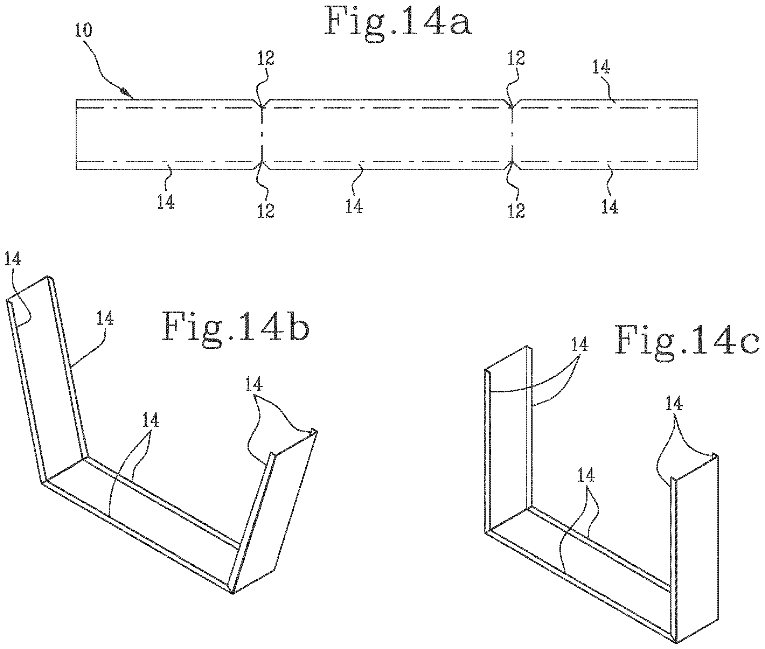

The perimeter frame 26 is made with profiles obtained from bent sheet metal which ensure relatively high structural strength and stiffness. The various steps of bending the perimeter frame are illustrated in figures 14a, 14b and 14c.

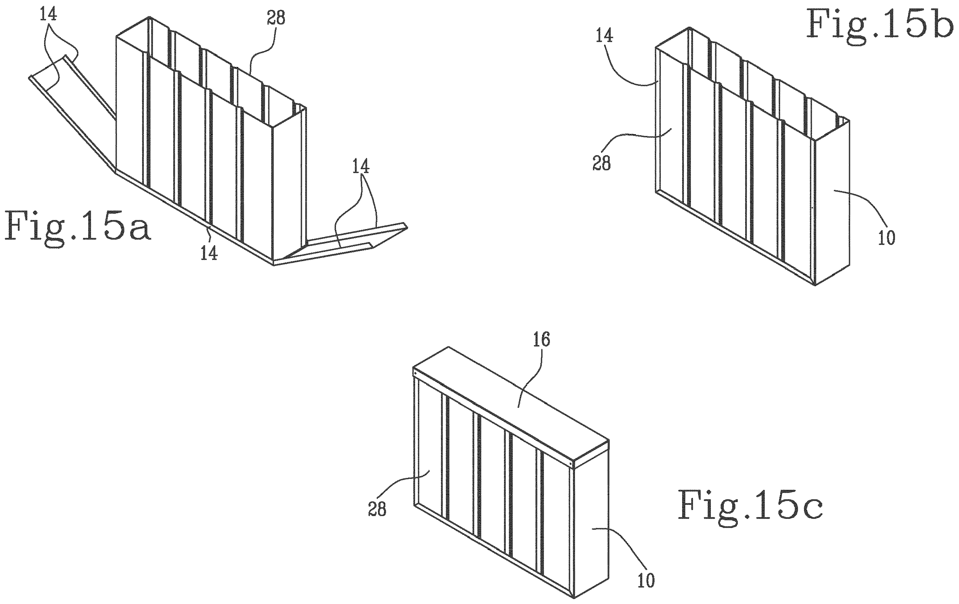

The retaining frame 26 is produced by progressive bending of a flat, extended sheet 10, shown in figure 15a.

Advantageously, the sheet 10 comprises indentations in the bending points 12 provided for and is progressively bent according to the steps shown in figures 15b and 15c.

Preferably, the perimeter retaining frame 26 is produced by bending the metal sheet 10 into a "U" shape.

Once formed, the frame 26 comprises flanges 14 for retaining and coupling to the panels 28. The flanges 14 of the frame 26 serve as retaining and coupling elements during assembly with the permeable panels 28.

When the folds have been formed, one proceeds with the step of inserting the permeable panels 28 into the frame 26 (Figure 15a).

In this step it may be necessary to use temporary strapping to keep the frame 26 adherent to the panels 28 also in the lateral areas. Advantageously, both of the panels 28 obtained with the process of the present invention are ribbed panels 282.

The ribs 30 of the ribbed panels 282 are subsequently described in detail. If both the panels 28 comprise ribs 30, the latter are spaced apart from one another by a pitch *a*, and the two ribbed panels 282 are arranged in such a way that the ribs 30 of one panel 28 are parallel to the ribs 30 of the other panel 28.

In particular, the two ribbed panels 282 are arranged in such a way that, in a view perpendicular to the two panels 28, a rib 30 of one panel 28 is comprised between two ribs 30 of the other panel 28.

In accordance with a fourth aspect thereof, the invention relates to a process for manufacturing a flat filter 22 with activated carbon 24 for industrial use, comprising the steps of:
- assembling a housing 20 in accordance with any one of the preceding claims;
- inserting a bag 36 made of textile material and containing a predetermined amount of activated carbon (24) into the housing 20;
- positioning a cover 16 on the open part of the housing 20;
- sealing the cover to the housing by means of fastening elements.

Once the filter has been filled with the activated carbon, the cover 16 is positioned and sealed by means of special fastening elements. Advantageously, the panels 28 obtained with the process of the present invention are joined to the perimeter frame 26 in such a way as to form a solid structure.

As mentioned above, in the housing 20 of the invention, at least one of the two panels 28 obtained from the manufacturing process is ribbed.

In accordance with a fourth aspect, the invention relates to a process for assembling an activated carbon filter 22 for industrial use comprising the steps of assembling a housing 20 for a flat filter as described above, inserting a bag 36 made of textile (or micro-perforated) material and containing a predetermined amount of activated carbon 24 into the housing 20, positioning a cover 16 on the open part of the housing 20 and sealing the cover to the housing by means of suitable fastening elements. In particular, the present invention provides a process for manufacturing a filter 22 that ensures the continuity of the textile material of the bag 36 retaining the activated carbon 24 and the associated dust.

The present invention provides a process for manufacturing a filter 22 that enables it to be produced without the need to rely on welds. In this manner one avoids areas where corrosion of the galvanised sheet metal may be rapidly triggered.

Furthermore, the present invention provides a process for manufacturing a filter 22 that ensures minimal deformations, comprised within tolerances acceptable for the specific technical field.

Finally, the present invention provides a process for producing a filter 22 that prevents the formation therewithin of preferential pathways amidst the activated carbon 24, thereby maintaining the efficiency of the air treatment defined at the design stage. The above description elaborates on the technical features distinguishing the invention from prior art solutions. For all the other features, which may be common to the prior art and to the invention, reference may be made to the introduction, where the prior art is described and commented upon.

As the skilled person can well understand, the invention makes it possible to overcome the drawbacks previously highlighted in reference to the prior art.

In particular, the present invention provides a filter 22 that ensures the continuity of the textile material of the bag 36 retaining the activated carbon 24 and the associated dust.

Furthermore, the present invention provides a filter 22 that ensures minimal deformations, comprised within tolerances acceptable for the specific technical field.

Finally, the present invention provides a filter 22 that prevents the formation therewithin of preferential pathways amidst the activated carbon 24, thereby maintaining the efficiency of the air treatment defined at the design stage.

It is clear that the specific features are described in relation to different embodiments of the invention by way of non-limiting example. The person skilled in the art will obviously be able to introduce further modifications and variants of the present invention with the aim of satisfying specific contingent needs. For example, the technical features described in relation to one embodiment of the invention can be extrapolated therefrom and applied to other embodiments of the invention. Such modifications and variants, moreover, are contained within the scope of protection of the invention, as defined by the following claims.

## Claims

1. A housing (20) for a flat filter (22) with activated carbon (24) for industrial use, comprising a perimetral frame (26) and two permeable panels (28) parallel to each other, wherein at least one of the two panels (28) is a corrugated panel (282).

2. The housing (20) according to claim 1, wherein the corrugated panel (282) predominantly extends in a main plane π and comprises ribs (30) which extend away from the plane π.

3. The housing (20) according to claim 2, wherein the ribs (30) are obtained by consecutive folds of the panel (28) parallel to each other.

4. The housing (20) according to any one of the preceding claims, wherein both the panels (28) are corrugated panels (282).

5. The housing (20) according to the preceding claim, wherein both the panels (28) comprise ribs (30) spaced apart from one another by a pitch *a*, and wherein the two corrugated panels (282) are arranged so that the ribs (30) of one panel (28) are parallel to the ribs (30) of the other panel (28).

6. The housing (20) according to the preceding claim, wherein the two corrugated panels (282) are arranged so that, in a view perpendicular to the two panels (28), a rib (30) of one panel (28) is comprised between two ribs (30) of the other panel (28).

7. The housing (20) according to any one of the preceding claims, wherein the housing (20) defines therewithin a cavity (34) which is one, continuous and uninterrupted.

8. The housing (20) according to any one of the preceding claims, wherein the housing (20) defines therewithin a simply connected topological space.

9. A filter (22) with activated carbon (24) for industrial use comprising a housing (20) according to any one of the preceding claims, a bag (36) made of textile material and a predetermined amount of activated carbon (24).

10. The filter (22) with activated carbon (24) according to the preceding claim, wherein the textile material of the bag (36) continuously extends along both the panels (28).

11. A process for manufacturing a housing (20) for a flat filter (22) with activated carbon (24) for industrial use, comprising the steps of:
- providing two permeable panels (28) parallel to each other, wherein at least one of the two panels (28) is a ribbed panel (282);
- forming a perimeter retaining frame (26) by bending;
- inserting the two panels (28) into said perimeter retaining frame (26).

12. The process according to claim 11, wherein said step of providing the two panels (28) is carried out by bending a single extended metal sheet (5) in several parts.

13. The process according to claim 12, wherein said step of providing the two panels (28) is carried out by means of steps of:
- bending two extended metal sheets (5a, 5b) into "C" or "L" shapes;
- positioning the two metal sheets bent in the preceding step, placing them side by side so as to have two panels (28) parallel to each other.

14. The process according to one or more of claims 11-13, wherein said perimeter frame (26) is produced by progressive bending of an initially flat, extended sheet (10), comprising indentations (12) in the bending points provided for, so that it can contain the panels (28) inside it.

15. The process according to claim 14, wherein said perimeter retaining frame (26) is produced by bending into a "U" shape.

16. The process according to claim 15 wherein the perimeter retaining frame (26) comprises lateral flanges (14) which, during the step of inserting the panels (28) into the frame (26), form a retaining element.
